# EUROPEAN PATENT APPLICATION

(11) **EP 3 627 760 A1**
(43) Date of publication of application: **25.03.2020**
(21) Application number: 18801275.1
(22) Date of filing: 07.05.2018
(51) Int. Cl.: H04L 9/32, H04B 5/02, G06K 19/07, G06K 7/10

(54) **TECHNOLOGY VIRTUALIZATION METHOD FOR TRANSACTIONS INVOLVING CONTACTLESS CARDS**

(30) Priority: 15.05.2017 BR 102017010139
(71) Applicant: Pestana Ribeiro Costa, Artur, 13085-000 Campinas (BR)
(72) Inventor: Pestana Ribeiro Costa, Artur, 13085-000 Campinas (BR)
(74) Representative: Capitán García, Maria Nuria
(86) International application number: PCT/BR2018/050149
(87) International publication number: WO 2018/209414

(57) **Abstract**

A method is described for virtualization of technology for contactless or proximity cards transactions which allows to preserve the maintenance of the computer program originally installed on a hardware (Legacy Technology (LT) by the virtualization of a secure technology (Virtualization Technology (VT)) provided with authentication keys available only on a Security Device (SD) based on a high security processor where both the logic of the virtualization as well as the mutual authentication mechanisms between said Safety Device (SD) and the Contactless Card (Cp) are implemented through secure communication channels.

## Description

### FIELD OF THE INVENTION

The present patent of invention relates to a method for virtualization of the technology for contactless proximity cards transactions. More specifically, the invention comprises the implementation of a method for contactless cards transactions enabling to preserve the computer program originally installed on a hardware (Legacy Technology) through the virtualization of a safe technology (Virtualization Technology) provided with authentication keys available only on a safety device on the basis of a high-security processor where both the logic of the virtualization and the mutual authentication mechanisms between said safety device and the contactless card are implemented by means of secure communication channels.

### BACKGROUND OF THE INVENTION

Contactless cards or with RFID technology represent at present around 85% of the market, replacing bar codes, magnetic stripe cards and paper tickets. There is a great variety of contactless cards in the market, such as for example the family of the MIFARE, HID iCLASS, FeliCa, Toppan, ASK, Oberthur, Orga, Gemplus cards, among others, being distinguished by the size, casing, memory and processing ability. Normally the contactless cards provide some support for symmetric cryptography, which renders them very convenient for use in applications with security requirements. The most widely known and utilized contactless card is the MIFARE card, introduced in the market in 1995 by NXP Semiconductors (former Philips), which utilizes RFID communication compatible with the ISO 14443A Standard. However, it employs proprietary protocol and cryptography, kept secret since their conception. This kind of card is being utilized by the industry for acess control and security systems, replacing public transport tickets, payment systems among others.

The MIFARE Classic specification was kept secret for more than 10 years, until 2008, when two research groups (Gerhard Gans, Jaap-Henk Hoepman, and Flavio Garcia. A Practical Attack on the MIFARE Classic. In Gilles Grimaud and François-Xavier Standaert, editors, Smart Card Research and Advanced Applications, volume 5189 of Lecture Notes in Computer Science, chapter 20, pg. 267-282. Springer Berlin Heidelberg, Berlin, Heidelberg. ISBN 978-3-540-85892-8. doi: 10.1007/978-3-540-85893-5\_20. URL http://dx.doi.org/10.1007/978-3-540-85893-5_20; Karsten Nohl, David Evans, S Starbug, and Henryk Plötz. Reverse-Engineering a Cryptographic RFID Tag. Science, (July):185-193. URL http://www.usenix.org/events/sec08/ tech/nohl.html), working nearly independently and with different approaches performed the reverse Engineering of the MIFARE Classic card and noticed relevant drawbacks. In particular, a drawback in the random numbers generator both in the card and in the reader and vulnerability in the Crypto-1 cipher, Gans et al. (Gerhard Gans, Jaap-Henk Hoepman, and Flavio Garcia. A Practical Attack on the MIFARE Classic. In Gilles Grimaud and François-Xavier Standaert, editors, Smart Card Research and Advanced Applications, volume 5189 of Lecture Notes in Computer Science, chapter 20, pages 267-282. Springer Berlin Heidelberg, Berlin, Heidelberg. ISBN 978-3-540-85892-8. doi: 10.1007/978-3-540-85893-5\_20. URL http://dx.doi.org/10.1007/978-3-540-85893-5_20). As a consequence, the secret key under utilization can be revealed in a few seconds if a hacker has access to RF (Radio Frequency) communication, making it possible unauthorized cloning or data modification. Following publications pointing drawbacks found on the MIFARE Classic card, the exploration of other kinds of attacks was made possible, these being published afterwards (Flavio D Garcia, Peter Van Rossum, Roel Verdult, and Ronny Wichers Schreur. Wirelessly Pickpocketing a Mifare Classic Card. In IEEE Symposium on Security and Privacy - S&P '09, pages 3-15, Oakland, California, USA. IEEE, IEEE Computer Society. ISBN 9780769536330. doi: 10.1109/SP.2009.6. URL http://ieeexplore.ieee.org/lpdocs/epic03/wrapper. htm?arnumber=5207633) and (Nicolas T Courtois. The Dark Side of Security by Obscurity and Cloning MiFare Classic Rail and Building Passes, Anywhere, Anytime. DisClosure, 2002(4). doi: 10.1016/S1353-4858(02)00415-4. URL http://eprint.iacr.org/2009/137.).

In this way, the MIFARE card does not provide the required safety, since the card can be easily cloned when all of its keys are revealed; all of the blocks can be 100% emulated, including the UID (Ghost Device and Proxmark III). Still, the 48-bits Keys are too short for present requirements, and the reader side accepts invalid size frames.

Even after the serious safety problems of the MIFARE Classic card were made public, the market keeps using it for new projects as a function of the already made investments and because of its low cost. The change to a safer card has been sought by many clients, but the complexity of this modification, specially for field applications, for example, public transport, makes it highly costly.

It is true that the volume of frauds with applications which use MIFARE Classic may increase significantly, since the cost to perform a few kind of attacks is relatively low, requiring just a genuine reader coupled to the PC. Besides, there are attacks implemented in the C language, of open source and available in the internet, which serve as a model and can be easily adapted, according to the interest of the hacker.

Among the alternative products, the state-of-the-art describes MIFARE PLUS, DESFIRE, CALYPSO and more recently, CIPURSE, based on an open-source specification. However, the implementation of such safer technologies can meet a few barriers, such as to require a free memory space which is unavailable by the provided equipment and require a completely new implementation which contributes to increasing the final complexity of the solution, particularly because the solution should retain the present technologies under use (Souza, Wellington Baltazar de. MIFARE Classic Card Attacks and Bypass measures. M.Sc. Dissertation, São Paulo State University (USP), 2011).

In this way, to provide a safe solution without the dramatic modification of the computer program installed in the equipment which manage the contactless cards transactions, an object of the invention is a method for the virtualization of the functionalities of the Legacy Technology, by substituting the existing authentication mechanisms by new keys which are available only on a safety device based on a high-security processor where both the virtualization logic as well as the mutual authentication mechanisms between such safety device and the contactless card are implemented through safe communication channels which secure that even if a hacker can access the data communicated by the card, the secret keys won't be generated.

Virtualization enables introducing immediate safety as well as coexistence with legacy technologies at very low cost and no risk, since the existing application is not altered, allowing the gradual increase in safety by the application of concepts of limitation of operations on fields of card memory data, securing continuous tracking on any adulteration of sensible data.

### SUMMARY OF THE INVENTION

The invention describes a method for the virtualization of technology for contactless cards transactions which enables introducing a safer method without dramatic modification of the computer program installed on the equipment which at present manage the contactless cards transactions.

The invention describes a method for the virtualization of technology for contactless cards transactions which replaces the authentication mechanisms by new registration keys made available on a safety device based on a high security processor where both the logic of the virtualization and the mutual authentication mechanisms between the safety device and the contactless card are implemented.

The invention describes a method for the virtualization of technology for contactless cards transactions which provides the addition of mechanisms of secure communication channels between the safety device and the contactless card.

The invention describes a method for the virtualization of technology for contactless cards transactions which can be applied between any technologies, but for sure it only makes sense and/or is advantageous for the virtualization of legacy, insecure technologies on modern, secure technologies.

### BRIEF DESCRIPTION OF THE DRAWINGS

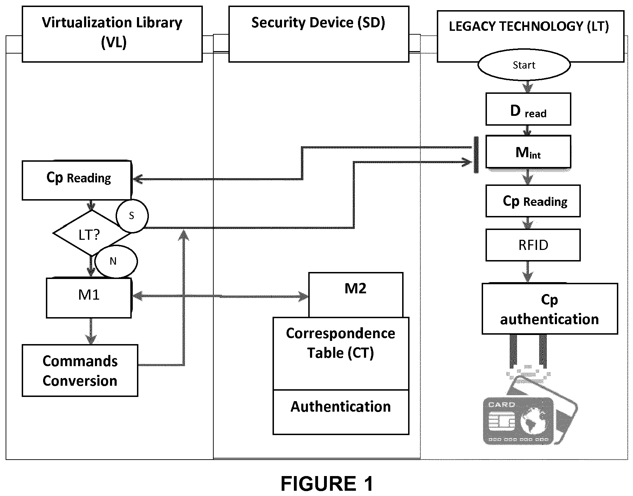

Figure 1 is a flow chart of the method for the virtualization of technology for contactless cards reading.

### DETAILED DESCRIPTION OF THE INVENTION

For the purposes of the present invention, the following terms have the following meaning:
A «Legacy Technology» (LT) comprises any technology implemented on a contactless card reading system.

A "Virtualization Technology" (VT) comprises a technology on which a Legacy Technology is virtualized, the Virtualization Technology (VT) being implemented on a contactless cards reading system operated by a safety device.

A "Safety Device" (SD) comprises a control central involving transactions using contactless cards provided with a high security processor where are stored the memory mapping tables and the authentication keys.

"Virtualization Library" (VL) comprises the mapping of all the commands received for functionalities of the Legacy Technology (LT) into commands which operate on the Virtualization Technology (VT), allowing the implementation of the same functionalities as those of the Legacy Technology and converting, in the portion related to content preservation, into commands for access to the technology on which the Legacy Technology is virtualized.

As can be seen in Figure 1, the virtualization of a Legacy Technology (LT) on a Virtualization Technology (VT) comprises the introduction of an Interception Module (Mᵢₙₜ) which redirects the calls utilized to operate the Legacy Technology (LT) through data mapping between the Legacy Technology (LT) and the Virtualization Technology (VT) executed by the Safety Device (SD) through the Virtualization Library (VB) and the Safety Device (SD).

The Interception Module (Mᵢₙₜ) intercepts the calls of functions executed by the Legacy Technology (LT) and checks if these constitute a Legacy Technology (LT) or not. If it is Legacy Technology (LT), the calls of functions follow the original function of the Legacy Technology (LT). When the Interception Module (Mᵢₙₜ) determines that it is Virtualization Technology (VT), the functionality treatment is effected by means of the Virtualization Library (VL) and the Security Device (SD) which translate into access/authentication/secure communication with Virtualization Technology (VT), which returns data and/or authenticates and/or writes data in the same formats and relative positions as the Legacy Technology (LT).

A Contactless card (Cp) is presented to a Reading Device (D_{read}) provided with implementation for Legacy Technology (LT) support and with implementation for Virtualization Technology (VT) support.

The Reading Device (D_{read}) conveys the call towards an Interception Module (Mᵢₙₜ) which directs the call to the Virtualization Library (VL) which identifies if the Contactless Card (Cp) belongs to the Legacy Technology (LT) or to the Virtualization Technology (VT).

In case the Contactless card (Cp) is identified by the Virtualization Library (VL) as belonging to the Legacy Technology (LT), the routine follows the flow of the Legacy Technology (LT) by using the RFID (*Radio-Frequency IDentification*) communication for the authentication of the (Cp) card.

In case the Contactless card (Cp) is identified by the Virtualization Library (VL) as belonging to the Virtualization Technology (VT), the commands required by the computer program based on the Legacy Technology (LT) are converted for access to the Virtualization Library (VL). It is stated then that the Legacy Technology (LT) is being virtualized on the new secure technology (in this case called Virtualization Technology (VT).

In an exemplary mode, a specific functionality for access to a counter (called *value block* by the MIFARE CLASSIC Legacy Technology) mapped by use of a counter on the CIPURSE Virtualization Technology requires the conversion of the counter reading which, in the MIFARE Legacy Technology (LT) is represented as counter [4], inverse (counter[4]), counter[4], CLT[4], while in the Virtualization Technology (VT), CIPURSE is represented as counter[4], since the copy controls, for better dependability, are internal. In this case, the Security Device (SD) prepares the assembly of a data pack of the same format expected from the Legacy Technology (LT) on the basis of counter[4] only.

Optionally, it is possible to map the functionality to emulate 100% of the data content, with the aid of the Security Device (SD), the conversion being then implemented otherwise.

In an exemplary mode, the conversion can be performed through mapping of the Legacy Technology (LT) *value block* memory block on a Virtualization Technology (VT) memory block of same size (in this case, 16 bytes). Thus, whenever a reading command of the Legacy Technology (LT) *value block* occurs, the conversion will occur just by the reading of the 16 bytes of the mapped area, this command lacking the process of implementing a 16 bytes pack from 4 bytes. However, if the command is for *increment & transfer* of the Legacy Technology (LT), since the value is stored in a repeated way on three copies, the second copy having inverted bits, the internal *increment* operation on the memory of the Virtualization Technology (VT) will be performed to secure the maintenance of the 3-copies structure. Therefore, the *increment* command should check if the 3 copies are compatible, that is, the first equal to the third and equal to the inverse bit of the second, and thus increment the first, save this value on the first and third copy and invert the same and save on the second copy, so that the working is identical to that of the Legacy Technology (LT).

In the context of the present invention the Virtualization Library (VL) includes two operation modules designed by M1 and M2.

The M1 Modulus, external to the Security Device (SD) executes the conversion of the commands received in the Legacy Technology (LT) format into the respective standard commands of the Security Device (SD) which implements the Virtualization Technology (VT).

The M2 modulus is preferably installed on the Security Device (SD) being in charge of implementing the conversion into the Virtualization Technology (VT). Optionally, the M1 Module and the M2 Module of the Virtualization Library (VL) are external to the Security Device (SD). In this condition, the Security Device (SD) executes just the calculation of the communication and authentication keys. The Virtualization Library (VL) conveys the commands and data of the legacy interface function for processing at the Security Device (SD) which returns commands to the contactless card (Cp) of the Virtualization Technology (VT) to respond to the Security Device (SD) with the required data and/or keys to execute the virtualization process.

Once the virtualization is implemented, all the data from the Virtualization Technology (VT) are mapped at some position, requiring Correspondence Tables (CT) which convert, through a two-way relationship, memory positions, files and internal addresses between the Legacy Technology (LT) and the Virtualization Technology (VT).

For the sake of illustration, the sequence of legacy functions exhibit the following commands:
a) MIFARE_AUTHENTICATE (key=x, sector=y) - the Security Device (SD) by means of the Correspondence Table (CT) between the keys displayed on the Virtualization Library (BV), selects the key of the Virtualization Technology (VT) side (in this case, CIPURSE) to be utilized to validate the key=x of the sector = y, conveying the due command and receiving the responses from the Contactless card (Cp). The Security Device (SD) analyses the result of the key authentication process and, in case of success (that is, when the Contactless card (Cp) responds to the call to the Security Device (SD) which evidences that the internal key is the expected key, the Security Device (SD) responds to the Contactless card (Cp) by another challenge which proves to the (Cp) card that the Security Device (SD) also knows the same key which is being authenticated so that the Contactless card (Cp) and the Security Device (SD) become mutually authenticated), responds to the call of the Legacy Technology (LT) function converted into Virtualization Technology with the same codes required by the original function (the Legacy Technology (LT) function);
b) MIFARE_READ(block=x) - the Security Device (SD) on the basis of the Correspondence Table (CT) of the memory mapping, decides which position of the memory/file should be accessed to obtain the data corresponding to the block=x of the Legacy Technology (LT);
c) MIFARE_WRITE(block=x, data=yyyyyyy...) - the Security Device (SD) on the basis of the Correspondence Table (CT) of the memory mapping effects the conversion of the Virtualization Technology (VT) function with the same codes required by the Legacy Technology (LT), by writing on the memory card (Cp) and responding to the writing command by the result ok (when the writing is confirmed) or *not ok* (when there are writing errors), with the same codes required for this response. In this case the virtualization offers an extra advantage since it enables to secure that the command was received by the Contactless card (Cp), checking the response of the same and its signature. This is because the Virtualization Technology (VT) (when CIPURSE or any other with support to the communication with a safe channel) allows the responses to be signed with a cryptographic code generated by the Contactless Card (Cp) based on the authentication key and all the flow of commands until then, it not being possible for any other device to generate this signature.

For all of the remaining commands, a sequence of operations for the right virtualization of the legacy is provided. Since the Virtualization Technology (VT) is connected by means of signed and eventually ciphered communication channels, the responses given at the calls between the Contactless Card (Cp) and the Security Device (SD) secure that, besides implementing the original function (in this case, the Virtualization Technology (VT)) as if it were the Legacy Technology (LT), they also offer the ability of checking if the data communicated between the Security Device (SD) and the Contactless Card (Cp) are securely generated by these, since each data exchange will be signed by a MAC (Message Authentication Code) mechanism which assures that the content was possible to be generated only by the one which knows the secret associated key, this key being derived from the one used at the starting point of the communication between the Contactless Card (Cp) and the Security Device (SD) for the mutual authentication of these elements.

The virtualization solution can be applied between any technologies, but obviously it does make sense and/or is advantageous for the virtualization of Legacy and insecure Technologies (LT) on secure technologies (Virtualization Technology) (VT) only.

For the sake of Exemplification a list of possible virtualizations is set forth to allow the addition of safer technologies for applications designed for legacy and insecure technologies, as evidenced by the non-patent literature:
a) virtualizes MIFARE CLASSIC on CIPURSE: virtualized= CLASSIC, virtualizer=CIPURSE;
b) virtualizes MIFARE CLASSIC on MIFARE PLUS: virtualized = CLASSIC, virtualizer =MIFARE PLUS;
c) virtualizes MIFARE CLASSIC on DESFIRE: virtualized= CLASSIC, virtualizer=DESFIRE;
d) virtualizes MIFARE PLUS on CIPURSE: virtualized= PLUS, virtualizer=CIPURSE;
e) virtualizes MIFARE PLUS on DESFIRE: virtualized= CLASSIC, virtualizer=DESFIRE;
f) virtualizes CALYPSO on CIPURSE: virtualized= CALYPSO, virtualizer=CIPURSE;
g) virtualizes CALYPSO on DESFIRE: virtualized= CALYPSO, virtualizer=DESFIRE.

All the combinations are possible however it only makes sense to virtualize a simpler technology on a more complex one.

For the sake of exemplification, a list of possible virtualizations is offered to allow the addition of secure and open Technologies (based on open-source market Standards) on applications designed for other secure Technologies.
a) DESFIRE virtualized on CIPURSE (L,S,T);
b) CALYPSO virtualized on CIPURSE(L,S,T);
c) MIFARE PLUS virtualized on CIPURSE(L,S,T).

Thus, it is possible to add new Technologies on an existing application, keeping a single implementation of computer program and the addition of several virtualizations.

## Claims

1. A method for virtualization of Technology for contactless cards transactions, wherein said method comprises:
a) Contactless Card (Cp) is read by a Reading Device (D_{read}) provided with implementation for Legacy Technology (LT) support and of Virtualization Technology (VT);
b) Reading Device (D_{read}) conveys the call to an Interceptation Module (Mint);
c) Interceptation Module (Mᵢₙₜ) conveys the call to a Virtualization Library (VL);
d) Virtualization Library (VL) verifies if the Contactless Card (Cp) belongs to the Legacy Technology (LT) or to the Virtualization Technology (VT);
e) In case it belongs to the Legacy Technology (LT) the calls follow the Legacy Technology (LT) original function using the RFID (Radio Frequency IDentification) communication for the (Cp) card authentication;
f) In case it belongs to the Virtualization Technology (VT), Module M1, external to the Security Device (SD) makes the conversion of the commands received in the Legacy Technology (LT) format towards the respective standardized commands of the Security Device (SD) which implements internally the conversion into the Virtualization Technology (VT) using the Module M2;
g) The Virtualization Library (VL) conveys the commands and data of the legacy interface function for processing on the Security Device (SD) which returns commands to the Contactless Card (Cp) of the Virtualization Technology (VT) in order to respond to the Security Device (SD) with the data and/or keys required to execute the virtualization process;
h) Data of the Virtualization Technology (VT) are mapped at some position, requiring Correspondence Tables (CT) between keys disposed on the Virtualization Library (VL) which convert, by means of a two-way relationship, memory positions, files and internal addresses between the Legacy Technology (LT) and the Virtualization Technology (VT);
i)Responses between the Contactless Card (Cp) and the Security Device are signed by means of a MAC (Message Authentication Code).mechanism.

2. The method for virtualization of Technology for contactless cards transactions according to claim 1, wherein the data content is emulated for conversion of the commands based on the Legacy Technology (LT) for access to the Virtualization Technology (VT).

3. The method for virtualization of Technology for contactless cards transactions according to claim 1, wherein Module 2 of the Virtualization Library (VL) is installed on the Security Device (SD).

4. The method for virtualization of Technology for contactless cards transactions according to claim 1, wherein Module 2 of the Virtualization Library (VL) is installed external do the Security Device (SD) to perform the calculation of communication and authentication keys.
